Europäisches Patentamt

European Patent Office

Office européen des brevets

(11) Veröffentlichungsnummer: **0 387 557**
**A2**

## (12) EUROPÄISCHE PATENTANMELDUNG

(21) Anmeldenummer: **90103409.0**

(22) Anmeldetag: **22.02.90**

(51) Int. Cl.⁵: **B60J 7/05**

(30) Priorität: **11.03.89 DE 3907932**

(43) Veröffentlichungstag der Anmeldung:
**19.09.90 Patentblatt 90/38**

(84) Benannte Vertragsstaaten:
**DE ES FR GB IT NL SE**

(71) Anmelder: **Webasto AG Fahrzeugtechnik**
**Kraillingerstrasse 5**
**D-8035 Stockdorf(DE)**

(72) Erfinder: **Kohlpaintner, Georg**
**Röntgenstrasse 31**
**D-8033 Martinsried(DE)**
Erfinder: **Bienert, Horst**
**Max Klingerstrasse 15**
**D-8035 Gauting(DE)**

(54) **Schiebedach und/oder Schiebehebedach für Fahrzeuge.**

(57) Es wird ein Schiebedach und/oder ein Schiebehebedach für Fahrzeuge angegeben, bei dem eine Einstelleinrichtung vorgesehen ist, die den Führungsschlitten bzw. die mit diesem gekoppelte Aufstelleinrichtung in der Schließstellung bzw. der Nullage des Deckels des Schiebedachs oder des Schiebehebedachs ausrichtet. Hierzu ist das mit dem Dekkel verbundene Kulissenteil in der Nullage beispielsweise mit Hilfe des vorderen Niederhalters hinsichtlich seiner Lage zu einer Führungsschiene in Längsrichtung, zweckmäßigerweise mittels einer formschlüssigen Verbindung fixiert, während in der Nähe der Aufstelleinrichtung bzw. des Führungsschlittens im Kulissenteil eine Durchgangsöffnung vorgesehen ist, der beispielsweise eine Paßausnehmung an der Aufstelleinrichtung zugeordnet ist. Mit Hilfe eines Einstellteils wird die Paßausnehmung zu der Durchgangsöffnung am Kulissenteil fluchtgerecht ausgerichtet und hierdurch wird die Aufstelleinrichtung bzw. der Führungsschlitten in der vorbestimmten Nullage zum Deckel bzw. dem Kulissenteil desselben ausgerichtet.

FIG. 2

## Schiebedach und/oder Schiebehebedach für Fahrzeuge

Die Erfindung befaßt sich ganz allgemein mit einem Fahrzeugdach, das in Form eines Schiebedaches und/oder eines Schiebehebedaches ausgebildet sein kann. Bei einem derartigen Fahrzeugdach ist ein Deckel vorgesehen, der an seitlichen Führungsschienen geführt ist und der wahlweise mittels einer Aufstelleinrichtung aus einer Dachöffnung an seinem hinteren Ende absenkbar und unter ein festes Dachteil verschiebbar oder gegebenenfalls mit seinem hinteren Ende über das feste Dachteil nach oben ausstellbar ist, wobei beidseitig je ein hinterer und vorderer sowie mit Führungen an den Führungsschienen zusammenarbeitender Niederhalter nahe der Vorder- und Hinterkante am Deckel vorgesehen sind, und mittels einer Einstelleinrichtung in der Schließstellung des Deckels der Deckel und die Aufstelleinrichtung lagemäßig zueinander ausrichtbar sind.

Ein Fahrzeugschiebedach der vorstehend genannten Art ist beispielsweise aus DE-OS 34 17 098 bekannt. Zur Ausrichtung des Deckels und der Ausstelleinrichtung in Verbindung zu einer Antriebseinrichtung in der Schließstellung des Deckels, d.h. zur sogenannten Nullageneinstellung, wurde bisher ein Einstellstift verwendet, der durch die Aufstelleinrichtung geht und mit entsprechenden Eingriffsteilen am Deckel zusammenarbeitet. Eine solche die Aufstelleinrichtung durchsetzende Öffnung schwächt die Aufstelleinrichtung, so daß diese in entsprechen-der Weise dimensioniert werden muß. Zum anderen ergeben sich Schwierigkeiten, wenn eine solche Einstelleinrichtung bei einem flach bauenden Schiebedach verwirklicht werden soll, bei dem die Ausstelleinrichtung in Höhenrichtung möglichst wenig Platz in Anspruch nehmen soll. Noch größere Schwierigkeiten ergeben sich bei Schiebedächern, die einen Schiebehimmel haben, der in Abhängigkeit von der Bewegung des Deckels des Schiebedachs bewegt wird, wozu für die Mitnahme des Schiebehimmels beispielsweise ein Zahnstangen- und Zahnradtrieb vorgesehen sein kann, der ebenfalls in der Nähe der Ausstelleinrichtung angeordnet sein muß.

Die Erfindung zielt daher darauf ab, ein Schiebedach und/oder Schiebehebedach für Fahrzeuge bereitzustellen, bei dem in leicht zugänglicher Weise eine Nullageneinstellung auf konstruktiv möglichst einfache Weise vorgenommen werden kann.

Nach der Erfindung zeichnet sich ein Schiebedach und/oder Schiebehebedach für Fahrzeuge mit einem an seitlichen Führungsschienen geführten und wahlweise mittels einer Aufstelleinrichtung aus einer Dachöffnung an seinem hinteren Ende absenkbaren und unter ein festes Dachteil verschiebbaren oder gegebenenfalls mit seinem hinteren Ende über das feste Dachteil nach oben ausstellbaren Deckel, der beidseitig je einen hinteren und vorderen und mit Führungen an der Führungsschiene zusammenarbeitenden Niederhalter nahe seiner Vorder- und Hinterkante trägt, und mit einer Einstelleinrichtung für die lagemäßige Zuordnung des Deckels und der Aufstelleinrichtung in der Schließstellung des Deckels dadurch aus, daß der jeweilige vordere Niederhalter in der Schließstellung des Deckels in Längsrichtung unverschieblich festgelegt ist und daß mittels der Einstelleinrichtung die Aufstelleinrichtung relativ zu dem in Längsrichtung fixierten Deckel ausrichtbar ist.

Bei dem erfindungsgemäßen Fahrzeugschiebedach wird demnach der Deckel in der Schließstellung oder Nullage in Längslage unverschieblich festgehalten, was beispielsweise mit Hilfe des jeweiligen vorderen Niederhalters bewerkstelligt werden kann, so daß zur Ausrichtung von Deckel und Aufstelleinrichtung es ausreicht, die Aufstelleinrichtung relativ zum lagefixierten Deckel auszurichten. Hierdurch vereinfacht sich die Einstelleinrichtung und es können die Aufstelleinrichtung durchsetzende Öffnungen entfallen, so daß die Aufstelleinrichtung festigkeitsmäßig nur unwesentlich geschwächt ist und ferner die Einstelleinrichtung unbehindert durch weitere Teile, wie einen Führungsschlitten, des Fahrzeugschiebedachs zugänglich ist. Somit vereinfachen sich auch die Arbeiten zur Nullageneinstellung beim Fahrzeugschiebedach, was insbesondere im Hinblick einer automatischen Montage von Vorteil ist.

Vorzugsweise wird die Einstelleinrichtung von einer in der Nähe der Aufstelleinrichtung am Deckel vorgesehenen Durchgangsöffnung gebildet, durch die ein Einstellteil, wie ein Einstellstift, durchführbar ist, und dieses Einstellteil arbeitet dann mit einer zugeordneten Paßausnehmung an der Aufstelleinrichtung zusammen, so daß dann, wenn das Einstellteil in der Paßausnehmung liegt und in die Durchgangsöffnung am Deckel eingreift, die Aufstelleinrichtung sowie mit dieser verbundene Antriebseinrichtungen relativ zum Deckel unter lagemäßiger Zuordnung in der vorbestimmten Nullage ausgerichtet sind.

Vorzugsweise ist die Durchgangsöffnung an zu beiden Seiten des Deckels vorgesehenen Kulissen ausgebildet, wobei die Durchgangsöffnung vorzugsweise einen viereckigen Querschnitt hat, und die Paßausnehmung an der Aufstelleinrichtung ist zweckmäßigerweise in Form einer U-förmigen Vertiefung ausgelegt. Bei einer solchen Auslegung wird als Einstellteil ein Einstellstift mit einem ebenfalls viereckigen und entsprechend ausgelegten Querschnitt verwendet. Vorzugsweise ist die Paßausnehmung an der Oberseite der Aufstelleinrichtung vorgesehen, so daß sich die Ausnehmung fertigungstechnisch günstig an der Aufstelleinrichtung vorsehen läßt.

Vorzugsweise werden zur Lagefixierung des Deckels in seiner Schließstellung die jeweiligen vorderen Niederhalter so ausgelegt, daß sie formschlüssig in den Führungen an der Führungsschiene aufgenommen sind, wobei die jeweiligen Niederhalter beispielsweise mit einem viereckigen Querschnitt versehen sein können.

Wesentlich beim erfindungsgemäßen Fahrzeugschiebedach ist es, daß man für die Nullageneinstellung keine die Aufstelleinrichtung durchsetzende Öffnung benötigt, so daß sich die Aufstelleinrichtung und die damit zusammenarbeitenden Betriebsteile, wie Führungsschlitten u.dgl., platzsparend bauen lassen und hierdurch sowohl ein niedrigbauendes Schiebedach als auch ein solches bereitgestellt werden, bei welchem die Einstelleinrichtung unbehindert auch bei einem Schiebehimmel mit einem Zahnstangen- und Zahnradtrieb zugänglich ist. Die Einstelleinrichtung beim erfindungsgemäßen Fahrzeugschiebedach ist somit vielseitig verwendbar und läßt sich sowohl bei Schiebedächern als auch bei Schiebehebedächern mit und ohne Schiebehimmel verwenden.

Die Erfindung wird nachstehend anhand eines bevorzugten Ausführungsbeispiels unter Bezugnahme auf die beigefügte Zeichnung näher erläutert. Darin zeigt:

Fig. 1 eine Längsschnittansicht eines Fahrzeugschiebedachs, wobei der Deckel in ausgezogenen Linien in Schließstellung, in gebrochenen Linien in mit seiner Hinterkante abgesenkter Stellung und in strichpunktier ten Linien in seiner ausgestellten Stellung dargestellt ist, und

Fig. 2 eine perspektivische Teilansicht eines Fahrzeugschiebedachs zur Verdeutlichung der Einstelleinrichtung nach der Erfindung.

Zur Erläuterung der Erfindung dient in der nachstehenden Beschreibung als Beispiel ein insgesamt mit 1 bezeichnetes Schiebehebedach für Fahrzeuge.

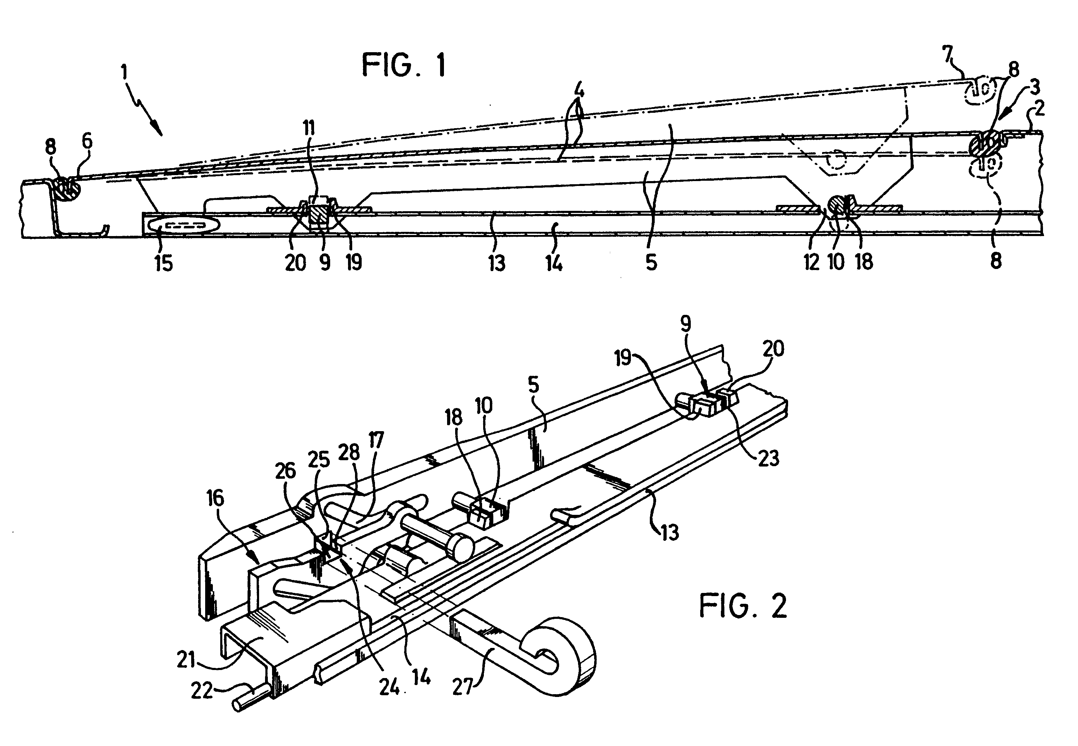

Unter Bezugnahme auf Fig. 1 ist in einem festen Dachteil 2 eine Dachöffnung 3 vorgesehen. In dieser Dachöffnung 3 ist ein Deckel 4 des Schiebehebedachs 1 angeordnet, der von einem auf beiden Längsseiten des Deckels 4 an diesem befestigten Kulissenteil 5 getragen wird. Bei der in Fig. 1 gezeigten Seitenansicht sind die den beiden Längsseiten des Deckels 4 zugeordneten Teile nur einmal zu sehen. An den vorderen und hinteren Enden des Deckels 4, die mit 6 und 7 bezeichnet sind, sind schematisch angedeutete Dichtungen 8 vorgesehen. An dem jeweiligen Kulissenteil 5 ist in der Nähe des vorderen Endes 6 ein zapfenförmiger, vorderer Niederhalter 9 und in der Nähe des hinteren Endes 7 ein weiterer zapfenförmiger, hinterer Niederhalter 10 angebracht. Der vordere Niederhalter 9 und der hintere Niederhalter 10 sind jeweils einer vorderen Öffnung 11 und einer hinteren Öffnung 12 an der Oberseite einer ortsfesten Führungsschiene 13 zugeordnet, die einen Führungskanal 14 begrenzt. In dem Führungskanal 14 ist beispielsweise ein vorderer Gleitschuh 15 gleitbeweglich geführt, der ebenfalls an dem Kulissenteil 5 angebracht ist, das den Deckel 4 trägt. In der Nähe des hinteren Endes 7 des Deckels 4 ist eine in Fig. 2 näher gezeigte und im Zusammenhang mit dieser Fig. 2 näher erläuterte Aufstelleinrichtung 16 angeordnet. Diese Aufstelleinrichtung 16 arbeitet mit einem Kulissenschlitz 17 in dem Kulissenteil 5 zusammen. Beim Beispiel eines Schiebehebedachs 1 sind die wesentlichen Hauptstellungen des Deckels 4 in Fig. 1 schematisch verdeutlicht. In ausgezogenen Linien ist in Fig. 1 der Deckel 4 in seiner Schließstellung, d.h. der sogenannten Nullage, gezeigt. In dieser Schließstellung schließt die Oberseite des Deckels 4 bündig mit dem festen Dachteil 2 ab und die Dachöffnung 3 ist im Zusammenwirken mit den Dichtungen 8 dicht verschlossen. Der vordere Niederhalter 9, dessen Zapfen einen viereckförmigen, zweckmäßigerweise quadratischen Querschnitt hat, ist in der zugeordneten Öffnung 11 in Längsrichtung unverschieblich festgelegt, d.h. der zapfenförmige vordere Niederhalter 9 ist formschlüssig in der zugeordneten vorderen Öffnung 11 aufgenommen. Der zapfenförmige hintere Niederhalter 10 liegt gegen eine hintere Begrenzungskante 18 der dort vorgesehenen hinteren Öffnung 12 an. Dieser zapfenförmige/hintere Niederhalter 10 ist - wie in Fig. 1 gezeigt - mit einem Längsspiel in der zugeordneten hinteren Öffnung 12 aufgenommen. In gebrochener Linie ist die Anordnung von Deckel 4, Kulissenteil 5 und vorderem Niederhalter 9 und hinterem Niederhalter 10 in einer Lage gezeigt, in der die Hinterkante des Deckels 4 unter das feste Dachteil 2 abgesenkt ist. In dieser abgesenkten Stellung des Deckels 4 liegt der vordere Niederhalter 9 auf dem Grund des von der Führungsschiene 3 gebildeten Führungskanals 14 auf, und der hintere Niederhalter 10 liegt ebenfalls auf dem Grund des Führungskanals 4 auf. In dieser abgesenkten Stellung des Deckels 4 kann dieser in Längsrichtung, d.h. in Fig. 1 gesehen nach rechts, unter das feste Dachteil 2 verfahren werden, so daß die Dachöffnung 3 allmählich freigegeben wird.

In strichpunktierten Linien ist die Anordnung aus Deckel 4, Kulissenteil 5, vorderem Niederhalter 9 und hinterem Niederhalter 10 in der ausgestellten Stellung des Schiebehebedachs 1 gezeigt. In dieser ausgestellten Stellung des Deckels 4 ist das hintere Ende 7 desselben über das feste Dachteil 2 nach oben weisend ausgestellt, und es wird ein Öffnungsspalt zwischen dem festen Dachteil 2 und dem hinteren Ende 7 des Deckels 4 beispielsweise zu Belüftungszwecken freigegeben. Der hintere Niederhalter 10 ist in der ausgestellten Stellung des Deckels 4 aus der zugeordneten Öffnung 12 nach oben abgehoben, und der hintere Niederhalter 10 ist etwas aus der in durchgezogener Linie dargestellten Nullage nach oben gerückt und zwischen Begrenzungsteilen 19, 20 gehalten, die im Bereich der vorne liegenden Öffnung 11 von der Führungsschiene 13 nach oben vorstehen.

In Fig. 2 der Zeichnung sind gleiche oder ähnliche Teile wie in Fig. 1 mit denselben Bezugszeichen bezeichnet. In einer perspektivischen Ansicht ist dort die Aufstelleinrichtung 16 näher gezeigt. Die Aufstelleinrichtung 16 ist beweglich an einem Führungsschlitten 21 gelagert und mit diesem bewegungsverbunden. Der Führungsschlitten 21 ist in dem von der Führungsschiene 13 gebildeten Führungskanal 14 längsverschiebbar gelagert. Mit dem Führungsschlitten 21 ist ein Antriebsglied, wie ein biegesteifes Antriebskabel 22, verbunden, das mit Hilfe einer nicht näher dargestellten Antriebseinrichtung bewegt wird und hierbei den Führungsschlitten 21 mitnimmt. In Fig. 2 ist die Einstelleinrichtung an dem Führungsschlitten 21 in der Schließstellung entsprechend der in Fig. 1 mit durchgezogenen Linien dargestellten Stellung gezeigt. Der vordere Niederhalter 9 hat einen Führungszapfen 23, der zweckmäßigerweise einen viereckigen bzw. quadratischen Querschnitt hat. Dieser Führungszapfen 23 ist formschlüssig in der zugeordneten Öffnung 11 zwischen den Begrenzungsteilen 19, 20 in Längsrichtung unverschieblich festgelegt. Hierdurch wird das Kulissenteil 5 mit dem Deckel 4 in der Schließstellung oder Nulllage festgehalten. Bei der Montage des Schiebehebedachs 1 ist nunmehr die Aufstelleinrichtung 16 ebenfalls bezüglich des Deckels 4 bzw. des Kulissenteils 5 der in Fig. 2 gezeigten Nulllage auszurichten. Für dieses Ausrichten ist eine insgesamt mit 24 bezeichnete Einstelleinrichtung vorgesehen, die eine in der Nähe der Aufstelleinrichtung 16 beim dargestellten Beispiel in dem Kulissenteil 5 vorgesehene Durchgangsöffnung 25 und an der Aufstelleinrichtung 16 eine Paßausnehmung 26 und ein Einstellteil 27 umfaßt. Beim dargestellten Beispiel ist die Paßausnehmung 26 als eine U-förmige Vertiefung 28 an der Oberseite der Aufstelleinrichtung 16 ausgebildet, und die Durchgangsöffnung 25 am Kulissenteil 5 hat einen viereckigen Querschnitt. Das Einstellteil 27 in Form eines Einstellstiftes hat ebenfalls einen entsprechend hierzu komplementär ausgebildeten viereckigen Querschnitt. Wenn - wie in gebrochenen Linien in Fig. 2 angedeutet - das Einstellteil 27 in die U-förmige Vertiefung 28 an der Aufstelleinrichtung 16 eingreift und durch die Durchgangsöffnung 25 am Kulissenteil 5 geht, ist die Aufstelleinrichtung 16 in vorbestimmter Lage, nämlich ebenfalls in der Nullage zu dem Kulissenteil 5 und somit zu dem Deckel 4 ausgerichtet. Wie aus Fig. 2 zu ersehen ist, befinden sich die Teile der Einstelleinrichtung 24 an einer beim Einbau des Schiebehebedachs 1 leicht zugänglichen Stelle, und insbesondere wird die Aufstelleinrichtung 16 durch die dort vorgesehene Paßausnehmung 26 kaum geschwächt, so daß sie in entsprechend gedrängter Bauweise ausgeführt werden kann. Auch vereinfachen sich bei einer solchen Einstelleinrichtung 24 die Einstellarbeiten im wesentlichen dadurch, daß das Kulissenteil 5 mit dem zugeordneten Deckel 4 mit Hilfe des vorderen Niederhalters 9 bereits in der Nullage fixiert angeordnet ist, so daß mit Hilfe der Einstelleinrichtung 24 nur noch die Aufstelleinrichtung 16 bezüglich des Deckels 4 bzw. des Kulissenteils 5 einjustiert zu werden braucht. Der mit der Aufstelleinrichtung 16 gekoppelte Führungsschlitten 21 nimmt dann in dieser einjustierten Stellung ebenfalls eine Nullage ein, und nicht näher dargestellte Antriebsglieder können in kämmenden Eingriff mit dem mit dem Führungsschlitten 21 verbundenen, biegesteifen Antriebskabel 22 gebracht werden. Mit Hilfe der Einstelleinrichtung 24 lassen sich somit die für die Nullageneinstellung erforderlichen Arbeiten einfach und schnell bei der Montage des Schiebehebedachs 1 ausführen.

Obgleich die Erfindung anhand eines Schiebehebedachs 1 als Beispiel erläutert ist, kann die voranstehend beschriebene Einstelleinrichtung 24 auch entsprechend bei einem Schiebedach zur Nullageneinstellung verwendet werden, d.h. bei einem solchen Fahrzeugdach, bei dem der Deckel 4 aus der in Fig. 1 in durchgezogenen Linien gezeigten Nullage die in gebrochener Linie dargestellte abgesenkte Stellung gebracht und dann in dem Führungskanal 14 längs der Führungsschiene 13 unter das feste Dachteil 2 in Längsrichtung verfahren werden kann, um die Dachöffnung 3 allmählich freizugeben. In diesem Fall kann dann der Führungsschlitten 21 bezüglich des in Längsrichtung fixierten Deckels bzw. dessen Kulissenteils 5 mit Hilfe der Einstelleinrichtung 24 in vorbestimmter Lage zu dem Deckel 4 einjustiert werden.

Bezugszeichen

1 Schiebehebedach insgesamt
2 festes Dachteil
3 Dachöffnung
4 Deckel
5 Kulissenteil
6 vorderes Ende des Deckels 4
7 hinteres Ende des Deckels 4

8 Dichtungen
9 vorderer Niederhalter
10 hinterer Niederhalter
11 Öffnung vorne
12 Öffnung hinten
13 Führungsschiene
14 Führungskanal
15 vorderer Gleitschuh
16 Aufstelleinrichtung insgesamt
17 Kulissenschlitz
18 hintere Begrenzungskante des hinteren Niederhalters 10
19/20 Begrenzungsteil des vorderen Niederhalters 9
21 Führungsschlitten
22 biegesteifes Antriebskabel
23 Führungszapfen des vorderen Niederhalters 9
24 Einstelleinrichtung insgesamt
25 Durchgangseinrichtung an Kulissenteil 5
26 Paßausnehmung an Aufstelleinrichtung 16
27 Einstellteil
28 U-förmige Vertiefung

**Ansprüche**

1. Schiebedach und/oder Schiebehebedach für Fahrzeuge mit einem an seitlichen Führungsschienen geführten und wahlweise mittels einer Aufstelleinrichtung aus einer Dachöffnung an seinem hinteren Ende absenkbaren und unter ein festes Dachteil verschiebbaren oder gegebenenfalls mit seinem hinteren Ende über das feste Dachteil nach oben ausstellbaren Deckel, der beidseitig je einen hinteren und vorderen und mit Führungen an der Führungsschiene zusammenarbeitenden Niederhalter nahe seiner Vorder- und Hinterkante trägt, und mit einer Einstelleinrichtung für die lagemäßige Zuordnung von Deckel und Aufstelleinrichtung in der Schließstellung des Deckels, dadurch **gekennzeichnet,** daß der jeweilige vordere Niederhalter (9) in der Schließstellung des Deckels (4) in Längsrichtung unverschieblich festgelegt ist, und daß mittels der Einstelleinrichtung (24; 25, 26, 27) die Aufstelleinrichtung (16) relativ zu dem in Längsrichtung fixierten Deckel (4) ausrichtbar ist.

2. Schiebedach und/oder Schiebehebedach für Fahrzeuge nach Anspruch 1, dadurch gekennzeichnet, daß die Einstelleinrichtung (24) von einer nahe der Aufstelleinrichtung (16) liegenden Durchgangsöffnung (25) am Deckel (4,5), einer dieser zugeordneten Paßausnehmung (26) an der Aufstelleinrichtung (16) und einem Einstellteil (27) gebildet wird.

3. Schiebedach und/oder Schiebehebedach für Fahrzeuge nach Anspruch 2, dadurch gekennzeichnet, daß die Durchgangsöffnung (25) auf beiden Seiten des Deckels (4) vorgesehenen Kulissen (5) ausgebildet ist.

4. Schiebedach und/oder Schiebehebedach für Fahrzeuge nach Anspruch 2 oder 3, dadurch gekennzeichnet, daß die Durchgangsöffnung (25) in der Kulisse (5) viereckig und die Paßausnehmung (26) als U-förmige Vertiefung (28) ausgebildet ist.

5. Schiebedach und/oder Schiebehebedach für Fahrzeuge nach einem der Ansprüche 2 bis 4, dadurch gekennzeichnet, daß die Paßausnehmung (26) an der Oberseite der Aufstelleinrichtung (16) vorgesehen ist.

6. Schiebedach und/oder Schiebehebedach für Fahrzeuge nach einem der vorangehenden Ansprüche, dadurch gekennzeichnet, daß in der Schließstellung des Deckels (4) der jeweilige vordere Niederhalter (9) formschlüssig in den Führungen (19, 20) an der Führungsschiene (13) aufgenommen ist.

7. Schiebedach und/oder Schiebehebedach für Fahrzeuge nach Anspruch 6, dadurch gekennzeichnet, daß der jeweilige vordere Niederhalter (9, 23) einen etwa viereckigen Querschnitt hat.

FIG. 1

EP 0 387 557 A2

FIG. 2